(19) **Europäisches Patentamt**
**European Patent Office**
**Office européen des brevets**

(11) **EP 2 950 414 A1**

(12) **EUROPEAN PATENT APPLICATION**
published in accordance with Art. 153(4) EPC

(43) Date of publication:
**02.12.2015 Bulletin 2015/49**

(51) Int Cl.:
*H02J 3/00* (2006.01)   *G06Q 50/06* (2012.01)
*H02J 3/46* (2006.01)

(21) Application number: **14742951.8**

(22) Date of filing: **23.01.2014**

(86) International application number:
**PCT/JP2014/000345**

(87) International publication number:
**WO 2014/115556 (31.07.2014 Gazette 2014/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.01.2013 JP 2013010809**

(71) Applicant: **Kabushiki Kaisha Toshiba**
**Minato-ku**
**Tokyo 105-8001 (JP)**

(72) Inventors:
• **CHIBA, Yuki**
**Tokyo 1058001 (JP)**
• **OHSAKO, Yoshiaki**
**Tokyo 1058001 (JP)**
• **AKIYAMA, Tetsuya**
**Tokyo 1058001 (JP)**

(74) Representative: **Ekstedt, Måns**
**Awapatent AB**
**P.O. Box 11394**
**404 28 Göteborg (SE)**

(54) **POWER SYSTEM CONTROL SYSTEM**

(57)     There are provided: a demand forecasting section (101) that calculates a demand forecast value of the power system as a whole; a supply planning section (102) that calculates a planned supply value of the power system as a whole; a difference extraction section (104) that finds the difference between said demand forecast value and planned supply value; an economic load allocation section (106) of a distribution system that allocates the difference obtained by the difference extraction section with respect to control subjects provided in the distribution system, in accordance with a cost optimization technique; and a control section that outputs control amounts based on the allocated amounts obtained by the economic load allocation section of said distribution system to the control subjects. The power system may be provided with a plurality of distribution systems and there may also be provided a difference allocated amount calculation section that allocates the difference obtained by the difference extraction section (104) in accordance with the difference adjustment capability of the respective distribution systems.

FIG. 1

**Description**

**FIELD**

As a control system for a power system, a technique is known that may be described as the Demand Response technique. Demand response means that, in response to demand (in particular during peak demand) on the power network, a customer reduces the customer's own power consumption and/or supplies the excess power to other customers; or similar arrangements.

**BACKGROUND**

As a control system for a power system, a technique is known that may be described as the Demand Response technique. Demand response means that, in response to demand (in particular during peak demand) on the power network, a customer reduces the customer's own power consumption and/or supplies the excess power to other customers; or similar arrangements.

A known economic optimization technique employed in current power systems is economic load allocation. A known technique of economic optimization in the context of increasing adoption of natural energy is the technique of establishing a power generation forecast from the equipment data of the various natural energy installations and/or past results, and applying this to economic load allocation. An example of such a technique is disclosed in Laid-open Japanese Patent Publication Number Tokkai 2012-34444 (hereinafter referred to as Tokkai 2012-34444).

In recent years, distributed power sources such as accumulators and renewable energy sources have become common and power sources are now to be found on the distribution side of the network also: a demand response arrangement has therefore been proposed in which the power employed by the user is controlled taking into account the presence and/or capability of power sources on the distribution side.

In the prior art, the output allocation of the generators that are provided in the upper-level system is then calculated so as to optimize fuel consumption. In other words, in the prior art, although demand of the distribution system was taken into account, no consideration at all was given to power sources on the distribution side or to demand response control thereof.

It is difficult to extract the maximum benefit from use of natural energy or the like power sources provided in the distribution system and/or the beneficial effect of demand response simply by fuel cost optimization of the generators located in the upper-level system. It is therefore not possible to derive the optimum solution, at which the power supply cost in both the upper-level system and the distribution system is a minimum, in the prior art.

An object of the present embodiment is to provide a control system for a power system whereby the power supply costs in regard to the user and the various installations or equipment in the distribution system can be minimized.

Another object of the present embodiment is to provide a control system for a power system whereby power supply costs can be minimized in the entire system including the base system, comprising a distribution system and upper-level generators.

A control system for a power system according to the present embodiment is characterized in that it comprises the following items:

(1) a demand forecasting section that calculates a forecast demand value in respect of the power system as a whole;
(2) a supply planning section that calculates a planned supply value in respect of the power system as a whole;
(3) a difference extraction section that finds the difference between said forecast demand value and planned supply value;
(4) an economic load allocation section of the distribution system that allocates the difference obtained by said difference extraction section in respect of the controllable items provided in the distribution system, in accordance with a cost optimization technique; and
(5) a control section that outputs to said controllable items control values based on the distribution amounts obtained by the economic load allocation section of said distribution system.

In the embodiment, the power system has a plurality of distribution systems and may comprise a difference allocation amount calculation section that allocates the difference obtained by the aforementioned difference extraction section in accordance with the difference adjustment capability of each of these distribution systems.

In the embodiment, the aforementioned power system comprises: a base system in which a plurality of upper-level generators are connected; and a plurality of distribution systems; the aforementioned power system may also be provided with an economic load allocation section of the base system, which allocates control amounts in respect of the aforementioned plurality of upper-level generators in accordance with a cost optimization technique.

**BRIEF DESCRIPTION OF THE DRAWINGS**

Fig. 1 is a view showing the layout of a power system according to the embodiment, in which a natural energy power source has been introduced;
Fig. 2 is a view showing the hardware layout of a power demand/supply planning device 100 according to the embodiment;
Fig. 3 is a functional block diagram showing the layout of the power demand/supply planning device 100 according to the embodiment;
Fig. 4 is a block diagram of a demand forecast section 101 and supply planning section 102;
Fig. 5 is a block diagram of a renewable energy generated amount forecasting section 103;
Fig. 6 is a block diagram of a distribution system economic load allocation section 106; and
Fig. 7 is a flowchart showing the operation of a power demand/supply planning device according to the embodiment.

**DETAILED DESCRIPTION OF THE PREFERRED EMBODIMENTS**

[1. First embodiment]

[1-1. Layout of the embodiment]

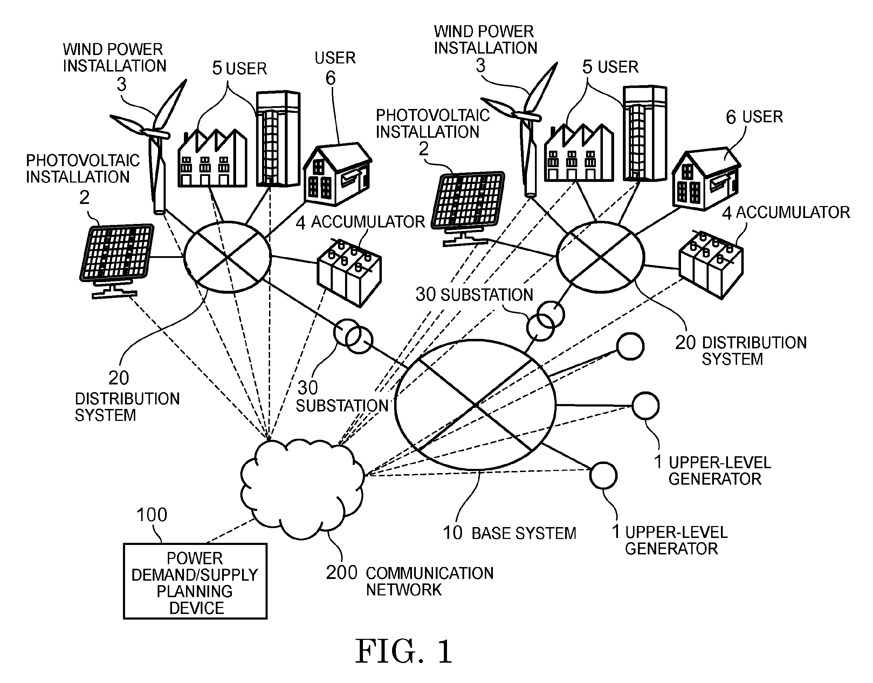

Fig. 1 is a view showing the layout of a power system according to this embodiment.
A power system comprises: a base system 10; a distribution system 20; and a distribution substation 30 that supplies power from the base system 10 to the distribution system 20. A plurality of upper-level generators 1 constituting controllable power sources are connected with the base system 10. With the distribution system 20, there are connected: a photovoltaic installation 2; a wind power installation 3; an accumulator 4; users 5 capable of demand response; and users 6 that are incapable of demand response.
Apart from power sources such as for example atomic power generators, thermal generators, or hydroelectric generators, the upper-level generator 1 includes power sources that perform charging, such as pumped storage generators or secondary batteries. The photovoltaic installation 2 and wind power installation 3 that are connected with the distribution system 20 constitute natural energy sources. Although not shown, the photovoltaic installation 2 or wind power installation 3 or the like natural energy power sources or accumulator 4 may be connected with the base system 10.
The power demand/supply planning device 100 is connected through a communication network 200 with the upper-level generators 1, and the photovoltaic installation 2, wind power installation 3, accumulator 4 and users 5 of the various distribution systems 20.

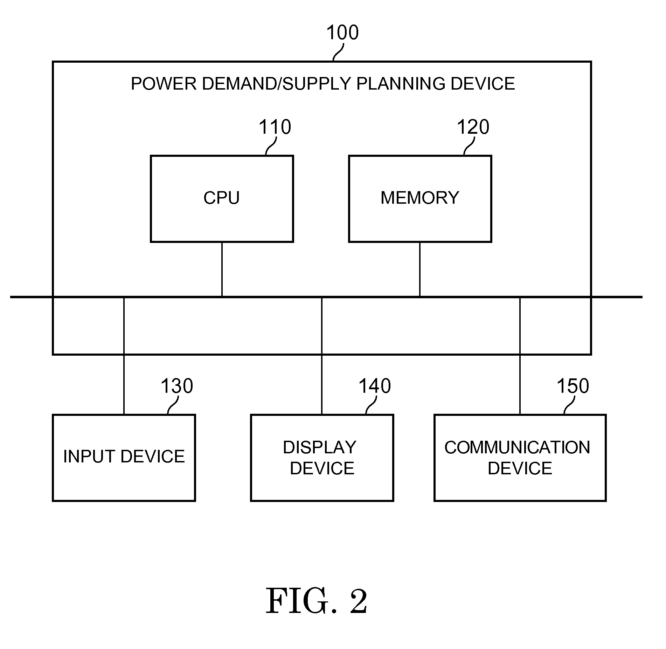

Fig. 2 shows an example of the hardware layout of the power demand/supply planning device 100. The power demand/supply planning device 100 comprises a CPU 110, a memory 120, and input device 130, a display device 140 and communication device 150.

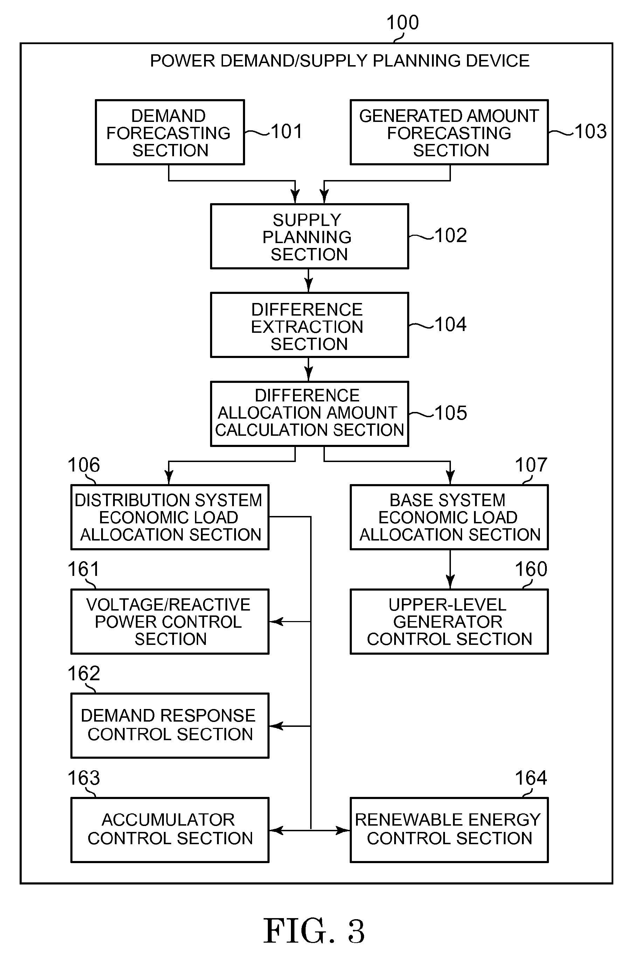

Fig. 3 shows a functional block diagram of the power demand/supply planning device 100. The power demand/supply planning device 100 comprises: a demand forecasting section 101 that inputs input data and calculates a forecast demand value for the system as a whole; a supply planning section 102 that calculates a planned supply value, based on the demand forecast; a renewable energy generated amount forecasting section 103 (hereinafter referred to as generated amount forecasting section 103); and a difference extraction section 104 that calculates the difference (deviation) of the forecast demand value and the planned supply value.
With the output side of this difference extraction section 104, there is connected a difference allocation amount calculation section 105 that allocates a difference depending on the control capability of the distribution system 20 to each substation; and, with this difference allocation amount calculation section 105, there is connected an economic load allocation section 106 of the distribution system 20. In allocation of the differences with respect to the various items of equipment of the distribution systems 20, this economic load allocation section 106 performs cost optimization calculations.
In this embodiment, the items that are controllable by the power demand/supply planning device 100 are: the delivery (or transmission) voltage control device that is provided in the substation; the users 5 that are capable of responding to demand response; the accumulators 4 that are capable of being charged/discharging with respect to the distribution system; and the photovoltaic installations 2 or wind power installations 3 that are connected with the distribution system. Consequently, there are connected with the output side of the economic load allocation section 106 of the distribution system 20: a voltage/reactive power control section 161; a demand response control section 162; an accumulator control section 163; and a renewable energy control section 164.
In addition, an economic load allocation section 107 of the base system, which performs cost optimization calculation in allocation of the amounts to be generated by the various upper-level generators 1, is connected with the output side of the difference extraction section 104 through the difference allocation amount calculation section 105. An output control section 160, which is connected with the base system, of the various upper-level generators 1 is connected with the output side of this economic load allocation section 107 of the base system.

The functions or processing procedures of the various sections constituting the power demand/supply planning device 100 are stored in the memory 120 as a computer program and are implemented by the CPU 110 reading and executing this computer program stored in the memory 120 as required. These various sections exchange data and/or control commands with the upper-level generators 1, the photovoltaic installations 2, wind power installations 3, accumulators 4 and users 5 of the various distribution systems 20, using the communication device 150 and communication network 200.

The power demand/supply planning device 100 inputs data and/or commands etc. as required from the input device 130. The data and/or calculation results and control amounts etc. that are generated or processed by the various sections of the power demand/supply planning device 100 are output outside the power demand/supply planning device 100 by the display device 140 and communication device 150.

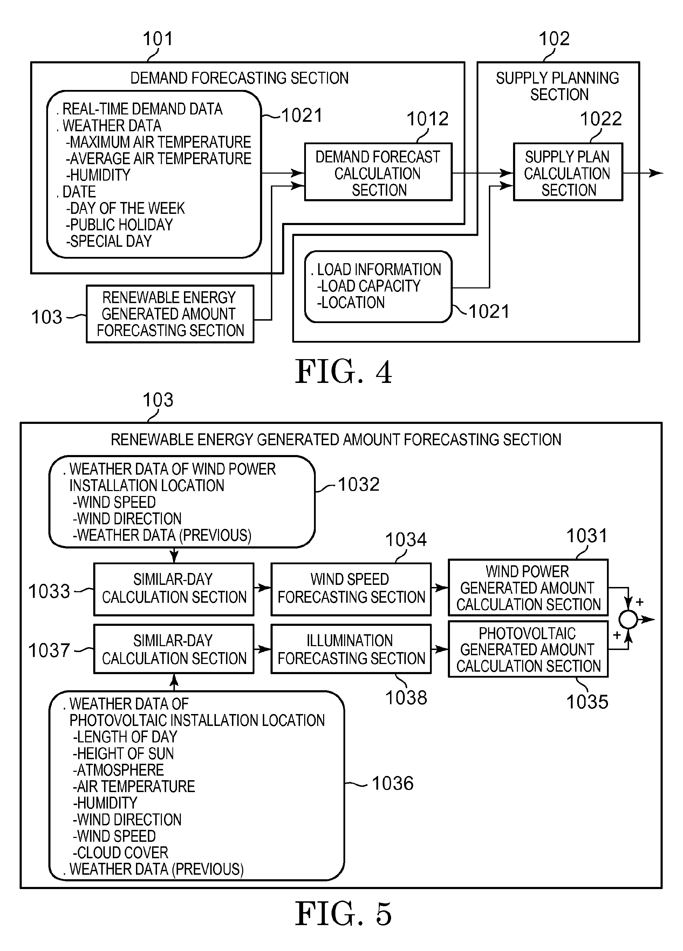

Fig. 4 shows examples of the demand forecasting section 101 and supply planning section 102. The demand forecasting section 101 comprises a demand forecasting calculation section 1012 that forecasts the demand on the day of the forecast, based on input data 1011 such as:

(1) real-time demand data;
(2) meteorological data such as maximum air temperature, average air temperature and humidity; and
(3) date data such as the day of the week, public holidays or special days.

The supply planning section 102 comprises:

(1) a supply plan calculation section 1022 that calculates a supply plan based on input data 1021 of for example load information such as the load volume and/or the location of occurrence of such load, and the demand forecast amounts calculated by the aforementioned demand/supply forecast calculation section 1012.

Fig. 5 shows an example of the generated amount forecasting section 103. Since forecasting the amount of renewable energy is difficult because of the large effect of the weather, the forecast values are calculated by comparing real-time measurement data with past data.

For each of the natural energy sources such as photovoltaic installations 2 or wind power installations 3 provided in the various distribution systems 20, the generated amount forecasting section 103 forecasts the generated amount, totals the forecast values of each of the distribution systems 20, and thereby forecasts the generated amount of renewable energy of the system as a whole. If natural energy sources are connected with the base system, the amount generated thereby is also forecast and totaled. The generated amount forecasting section 103 comprises a wind power generated amount calculation section 1031 and a photovoltaic generated amount calculation section 1035.

The wind power generated amount calculation section 1031 comprises: a similar-day calculation section 1033 that computes past days of similar weather to the day of the forecast, based on input data 1032 such as:

(1) weather data such as wind speed or wind direction at the wind power installation location and
(2) past weather data;

and a wind speed forecasting section 1034 that forecasts the wind speed based on the computed similar day. The wind power generated amount calculation section 1031 calculates the generated amount of the day of the forecast, based on the forecast wind speed. The input data 1032 may include for example the wind speed and wind direction.

The photovoltaic generated amount calculation section 1035 comprises: a similar-day calculation section 1037 that computes past days of similar weather to the day of the forecast, based on input data 1036 such as:

(1) weather data at the photovoltaic installation location and
(2) past weather data; and an illumination forecasting section 1038 that forecasts the illumination with respect to the photovoltaic installation, based on the computed similar day. The photovoltaic generated amount calculation section 1035 calculates the generated amount of the day of the forecast, based on the forecast illumination (illuminance). The input data 1036 may include for example the length of the day, the height of the sun, the atmosphere, air temperature, humidity, wind direction, wind speed and degree of cloud cover.

The difference extraction section 104 calculates the difference between the forecast demand value and the planned supply value. In this embodiment, not merely the forecast value and the planned value obtained by the demand forecast section 101 and the supply planning section 102, but also the forecast generated amount of renewable energy obtained by the generated amount forecasting section 103 are taken into account. Specifically, the difference with respect to the planned supply value is calculated by subtracting the forecast generated value from the forecast demand value.

The difference allocation amount calculation section 105 allocates the difference between the demand amount and supply amount calculated by the difference extraction section 104 to each substation constituting a power reception point of the various distribution systems 20, in a manner depending on the capabilities of the distribution system 20. Specifically, although the control amounts with respect to the various installations and users etc. connected with the various distribution systems 20 can be determined by a general economic load allocation section of a single distribution system, when the number of items to be controlled such as installations and users becomes very large, cost optimization calculations become complicated. In this embodiment, simplification and speeding up of the calculations is made possible by allocating differences to each distribution system 20 and controlling the installations or users in each distribution system 20 by implementing cost and optimization calculations with respect to these allocated differences in each individual distribution system 20.

In the allocation of differences by the difference allocation amount calculation section 105, differences are allocated based on fixed parameters such as the scale, particulars of the installations and type of users of the distribution systems 20. For example, in the case of a distribution system 20 wherein:

(1) the scale of the distribution system 20 is large;
(2) the amount of electricity that can be accumulated by the accumulator 4 is large;
(3) the number of users 5 capable of responding to demand response is large; and
(4) many users have domestic power generation installations, the difference-absorption capability of the distribution system 20 is high, so a larger difference can be allocated to such a distribution system 20.

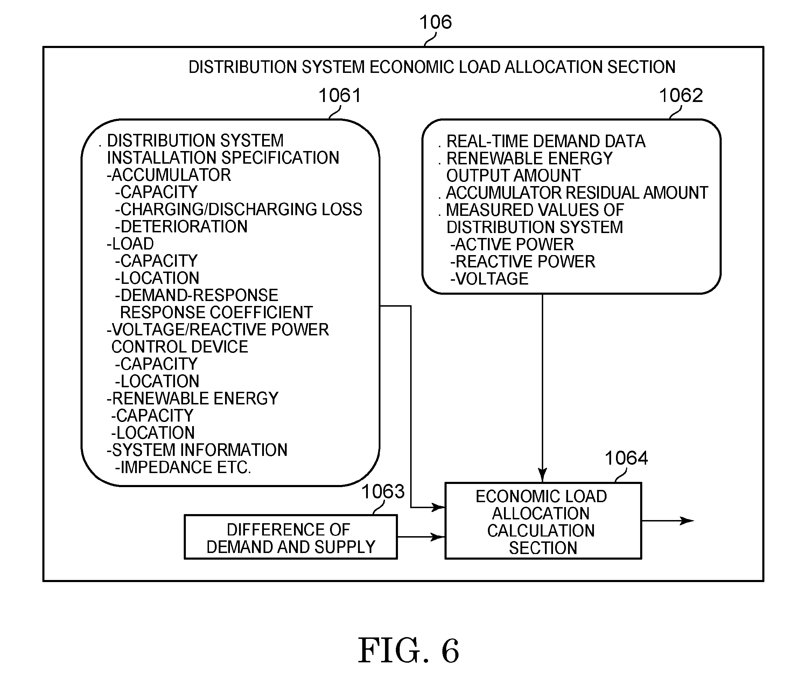

The economic load allocation section 106 of the distribution system 20 allocates such differences, of demand amount and supply amount, allocated to each distribution system 20 to the control sections 161 to 164 of the distribution systems 20 in question. In this allocation, appropriate allocations are set with respect to each of the items of equipment in the distribution systems 20 by a cost optimization technique. For this purpose, the economic load allocation section 106 is provided with an economic load allocation calculation section 1064 for obtaining an optimum solution. As shown in Fig. 6, this calculation section 1064 receives input data 1061 relating to fixed components as specified in the equipment specification of the distribution system 20 in question, input data 1062 relating to components that fluctuate from time to time, such as real-time demand data, and difference data 1063 between the demand amount and supply amount in each distribution system 20 calculated by the difference allocation amount calculation section 105, and, based on these data, calculates the allocation amounts of lowest cost in each distribution system.

As input data 1061 relating to fixed components, for example the following may be mentioned:

(1) The equipment specification of the distribution system 20

(a) the capacity of the accumulator, and its charging/discharging loss and deterioration,
(b) the load capacity, location and demand-response response rate,
(c) the capacity of the voltage/reactive power control device and its location,
(d) the renewable energy capacity and location, and
(e) system information such as impedance.

As input data 1062 relating to components that fluctuate from time to time, there may be mentioned for example the following:

(1) real-time demand data,
(2) renewable energy output amounts,
(3) accumulator residual amounts,
(4) measured values of active power, reactive power, and voltage etc. of the distribution system 20.

As an example, the economic load allocation calculation section 1064 that is provided in the economic load allocation section 106 of the distribution system calculates the economic load allocation with respect to each controllable item provided in the distribution system 20 in question. First of all, control quantities are calculated as follows for the voltage/reactive power control section 161, the demand response control section 162, the accumulator control section 163, and the renewable energy control section 164.

(1) voltage/reactive power control: a
(2) demand response control: b,
(3) accumulator control: c, and
(4) renewable energy control: d

As indicated by the following equation (expression) (1), the economic load allocation calculation section 1064 calculates control amounts of the various control sections 161 to 164 such that the difference x of the demand amount and supply amount will be equal to the total of the aforementioned control amounts.

$$x=a+b+c+d... \qquad\qquad Equation\ (1)$$

The unit costs y1, y2, y3, y4 applied to control of the respective control sections 161 to 164 are defined as follows. It should be noted that these costs are different for each distribution system 20, so economic load allocation calculation is required for each individual distribution system.
(1) Voltage/reactive power control: y1... the cost with respect to the apparent power, which increases or decreases when the voltage is controlled in the distribution system 20. In the distribution system 20, power consumption increases when the voltage is raised, increasing the generation cost.
(2) Demand response control: y2... the user reward for cooperating with demand-response.
(3) Accumulator control: y3... average value of generation cost of upper-level generator in the time zone when the accumulator is being charged.
(4) Renewable energy control: y4... when power generation by renewable energy is halted, the cost in supplying this power from the upper-level generator.

Using the aforementioned control amounts and unit costs, the calculation section 1064 computes an equation (2) for finding a target function (object function) X such that the control cost is a minimum. Costs may change depending on the amount of electricity generated and the target function is thus a nonlinear function: computation is therefore performed using for example a nonlinear programming method (nonlinear planning method).

$$X = min\ \Sigma\ (a*y1 + b*y2 + c*y3 + d*y4)...\quad Equation(2)$$

Nonlinear programming methods are set out below.
Gill, P. E., W. Murray, M. H. Wright "Numerical Linear Algebra and Optimization" Vol.1, Addison Wesley, 1991
K. Schittkowski (1981): The nonlinear programming method of Wilson, Han and Powell.

Part 1: Convergence analysis, Numerische Mathematik, Vol.38, 83-114,
Part 2: An efficient implementation with linear least-squares sub-problems, Numerische Mathematik, Vol.38, 115-127

For the economic load allocation section 107 of the base system, an economic load allocation section can be employed that performs cost optimization calculation in distribution of generated amounts with respect to the various upper-level generators 1 by various techniques. For example, cost optimization calculation can be performed identifying the generation cost required by each upper-level generator 1, taking as parameters various costs such as fuel costs, delivery(transmission)/distribution loss, costs involved in stopping/restarting operation, environmental maintenance costs associated with operation, and depreciation and amortization of the various generators.

[1-2. Operation of the embodiment]

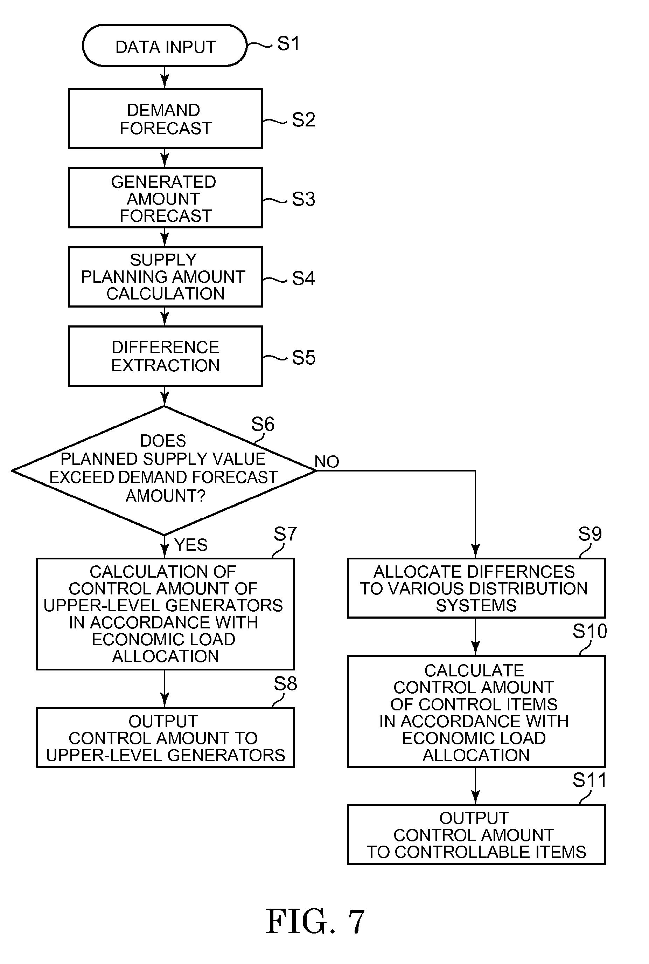

A specific description of the operation of a power demand/supply planning device 100 according to this embodiment is given below with reference to Fig. 7.
As shown by the flowchart of Fig. 7, when the input data 1011 comprising for example

(1) real-time demand data,
(2) weather data such as maximum temperature, average temperature and humidity, and
(3) date data such as day of the week, public holidays and special days

are input (step 1), the demand forecast section 101 forecasts (step 2) the demand on the day of the forecast, based on these data.

Likewise, the generated amount forecasting section 103 calculates the generated amounts of these (step 3), using the wind power generated amount calculation section 1031 and the photovoltaic generated amount calculation section 1035. The order in which this step 3 and the aforementioned step 2 performed is not important.

Specifically, the wind power generated amount calculation section 1031 calculates the wind power generated amount on the day of the forecast, based on input data 1032 such as

(1) weather data such as the wind speed and wind direction of the location of installation of the wind power generation installation, and
(2) past weather data.

The photovoltaic generated amount calculation section 1035 calculates the photovoltaic power generated amount on the day of the forecast, based on input data 1036 such as

(1) weather data of the location of installation of the photovoltaic generation installation, and
(2) past weather data.

The supply planning section 102 calculates (step 4) the demand forecast amount and renewable energy forecast generated amount obtained from the aforementioned demand forecast section 101 and the generated amount forecasting section 103, and also calculates the planned supply values to the various distribution systems 20, based on for example load information input data 1021, such as

(1) the load capacity and/or the generating location thereof, in each system.

After obtaining the demand forecast values and the planned supply values, the difference extraction section 104 calculates (step 5) the differences (deviations) between these. Regarding these differences, the range by which the planned supply value can exceed the forecast demand value represents the amount of power that can be provided by the upper-level generator 1 (YES in step 6).

In this situation, the amounts to be generated are allocated to the various upper-level generators 1 of the base system 10. In other words, the economic load allocation section 107 of the base system calculates (step 7) what manner of operating the various upper-level generators is most economic, and operates the various upper-level generators 1 (step 8) in accordance with the output result.

On the other hand, in the case of some of the differences, it may happen that the range by which the planned supply value undershoots the forecasting demand amount exceeds the amount that can be generated by the upper-layer generator 1 (NO in step 6). The amount of the deficiency is borne by the various distribution systems 20. However, the various distribution systems 20 differ as regards their scale, details of the equipment that they comprise and users, so, in this embodiment, the difference arising from this deficiency is allocated to the various distribution systems 20 (step 9) by the difference allocation amount calculation section 105.

The economic load allocation section 106 of the distribution system calculates respective control amounts (step 10) by performing cost optimization calculations with respect to the control sections 161 to 164 of the various distribution systems 20, based on these differences that have thus been allocated to these various distribution systems 20, and controls the various items of equipment of the distribution systems (step 11) in accordance with the control amounts that are thus obtained. When this is done, the power that is supplied to the various items of equipment possessed by the corresponding user 5 can be directly controlled, as a method of demand response. Also, demands for reduction of the amount of power used by the user can be made by utilizing the communication device 150, and the response results can be received.

[1-3. Beneficial effects of the embodiment]

With this embodiment, control amounts that are optimal for minimizing the costs with respect to each of the distribution systems 20 that are being controlled can be derived by employing an economic load allocation technique. This means that, when setting planned supply values having in mind load leveling, it becomes possible for the operator to derive the minimum cost of achieving this.

Thus, in this embodiment, it becomes possible to appreciate beforehand what degree of economic benefit can be anticipated from each of the various distribution systems 20 that are under operational control. An efficient equipment plan can therefore be established when upgrading the equipment of the various distribution systems 20.

In this embodiment, setting of price levels is facilitated, since it is possible to evaluate beforehand the economic benefits of demand response, whose more widespread deployment is currently being planned. In particular, control amounts for the distribution equipment such as to minimize costs can be calculated with a view to establishing and achieving updated planned values for each of the distribution systems, based on the supply plan for the upper-layer system. Also, reflecting control of the distribution systems 20, it is possible to achieve optimization of control costs of the system as a whole by implementing economic load allocation with respect to the planned values that are thus generated.

With this embodiment, power supply without shortfall as well as economic optimization by the upper-layer system generators can be achieved. In this way, economic optimization can be achieved in the power system as a whole, while making maximum use of the control means of the distribution systems 20.

[2. Other embodiments]

The present invention is not directly restricted to the embodiments described above and could be put into practice at the implementation stage with the structural elements modified in a range not departing from the gist of the invention. Also, various inventions can be formed by suitable combination of the plurality of structural elements disclosed in the above embodiment. For example, some structural elements can be deleted from the totality of structural elements disclosed in the embodiment. In addition, structural elements belonging to different embodiments can be combined as appropriate.

For example, if ample computing power is available, control of the installations and/or equipment or users of the various distribution systems can be performed directly, rather than allocating differences to the various distribution systems 20. Allocation of differences based on economic optimization could also be performed employing known techniques apart from that of the embodiment described above.

Regarding the generators and other installations or equipment of the base system 10 or the various distribution systems 20 that are the subject of control, the delivery voltage control device that is provided in the substations, users capable of responding to demand response, accumulators capable of charging/discharging with respect to the distribution systems and photovoltaic installations or wind power installations connected with the distribution systems can be treated individually or in combination. Apart from the embodiments described above, other equipment can be employed and the control parameters can also be appropriately selected.

Although, in the embodiment described above, a plurality of upper-level generators 1 connected with the base system were controlled by an economic optimization technique, it would also be possible to exercise control solely of the various items of equipment or installations in the individual distribution systems, without combining these with the base system. Instead of providing a generated amount forecasting section for the renewable energy, it is also possible to calculate the demand/supply differences (deviations) by means of a demand forecasting section and supply planning section.

[Possibility of industrial application]

The present invention is employed in a power system or a power demand/supply planning device in which demand response etc. is performed in a distribution system.

Claims

1.  A control system for a power system comprising:

    a demand forecasting section that calculates a demand forecast value of said power system as a whole;
    a supply planning section that calculates a planned supply value of said power system as a whole;
    a difference extraction section that finds a difference between said demand forecast value and planned supply value;
    an economic load allocation section of a distribution system that allocates said difference obtained by said difference extraction section with respect to control subjects provided in said distribution system, in accordance with a cost optimization technique; and
    a control section that outputs control amounts based on said allocated amounts obtained by said economic load allocation section of said distribution system to said control subjects.

2.  The control system for a power system according to claim 1,
    wherein said power system comprises a plurality of distribution systems, comprising a difference allocation amount calculation section that allocates said difference obtained by said difference extraction section in accordance with a respective difference adjustment capability of distribution systems.

3.  The control system for a power system according to claim 1 or claim 2,
    wherein said power system comprises a base system connected with a plurality of upper-level generators, and a plurality of distribution systems;
    comprising an economic load allocation section of the base system that allocates control amounts with respect to said plurality of upper-level generators in accordance with a cost optimization technique.

4.  The control system for a power system according to claim 1 or claim 2,
    wherein said power system comprises renewable energy generation equipment and said difference extraction section finds said difference by subtracting a generated amount obtained by said renewable energy generated amount forecasting section from a demand amount forecast value.

5.  The control system for a power system according to claim 1,
    wherein said control subjects are any or a combination of a delivered voltage control device provided in a substation, a user that is capable of demand response, an accumulator capable of charging/discharging with respect to a distribution system, and a photovoltaic installation or wind power installation connected with said distribution system.

FIG. 1

100

POWER DEMAND/SUPPLY PLANNING DEVICE

110

CPU

120

MEMORY

130

INPUT DEVICE

140

DISPLAY
DEVICE

150

COMMUNICATION
DEVICE

FIG. 2

**FIG. 3**

101

DEMAND FORECASTING SECTION

. REAL-TIME DEMAND DATA
. WEATHER DATA
    -MAXIMUM AIR TEMPERATURE
    -AVERAGE AIR TEMPERATURE
    -HUMIDITY
. DATE
    -DAY OF THE WEEK
    -PUBLIC HOLIDAY
    -SPECIAL DAY

~1021

1012

DEMAND FORECAST
CALCULATION
SECTION

102

SUPPLY PLANNING
SECTION

1022

SUPPLY PLAN
CALCULATION
SECTION

. LOAD INFORMATION
    -LOAD CAPACITY
    -LOCATION

~1021

103 ～

RENEWABLE ENERGY
GENERATED AMOUNT
FORECASTING SECTION

## FIG. 4

103

RENEWABLE ENERGY GENERATED AMOUNT FORECASTING SECTION

. WEATHER DATA OF WIND POWER
  INSTALLATION LOCATION
    -WIND SPEED
    -WIND DIRECTION
    -WEATHER DATA (PREVIOUS)

~1032

1034

1031

1033 ～

SIMILAR-DAY
CALCULATION SECTION

WIND SPEED
FORECASTING SECTION

WIND POWER
GENERATED AMOUNT
CALCULATION SECTION

+

1037 ～

SIMILAR-DAY
CALCULATION SECTION

ILLUMINATION
FORECASTING SECTION

PHOTOVOLTAIC
GENERATED AMOUNT
CALCULATION SECTION

+

1038

1035

. WEATHER DATA OF
  PHOTOVOLTAIC INSTALLATION LOCATION
    -LENGTH OF DAY
    -HEIGHT OF SUN
    -ATMOSPHERE
    -AIR TEMPERATURE
    -HUMIDITY
    -WIND DIRECTION
    -WIND SPEED
    -CLOUD COVER
. WEATHER DATA (PREVIOUS)

~1036

## FIG. 5

**106**

## DISTRIBUTION SYSTEM ECONOMIC LOAD ALLOCATION SECTION

**1061**

. DISTRIBUTION SYSTEM
  INSTALLATION SPECIFICATION
  -ACCUMULATOR
    -CAPACITY
    -CHARGING/DISCHARGING LOSS
    -DETERIORATION
  -LOAD
    -CAPACITY
    -LOCATION
    -DEMAND-RESPONSE
     RESPONSE COEFFICIENT
  -VOLTAGE/REACTIVE POWER
   CONTROL DEVICE
    -CAPACITY
    -LOCATION
  -RENEWABLE ENERGY
   -CAPACITY
   -LOCATION
  -SYSTEM INFORMATION
   -IMPEDANCE ETC.

**1062**

. REAL-TIME DEMAND DATA
. RENEWABLE ENERGY
  OUTPUT AMOUNT
. ACCUMULATOR RESIDUAL AMOUNT
. MEASURED VALUES OF
  DISTRIBUTION SYSTEM
   -ACTIVE POWER
   -REACTIVE POWER
   -VOLTAGE

**1063**

DIFFERENCE OF
DEMAND AND SUPPLY

**1064**

ECONOMIC LOAD
ALLOCATION
CALCULATION
SECTION

FIG. 6

EP 2 950 414 A1

DATA INPUT — S1

↓

DEMAND FORECAST — S2

↓

GENERATED AMOUNT FORECAST — S3

↓

SUPPLY PLANNING AMOUNT CALCULATION — S4

↓

DIFFERENCE EXTRACTION — S5

↓

S6 — DOES PLANNED SUPPLY VALUE EXCEED DEMAND FORECAST AMOUNT?

— NO →

YES ↓

CALCULATION OF CONTROL AMOUNT OF UPPER-LEVEL GENERATORS IN ACCORDANCE WITH ECONOMIC LOAD ALLOCATION — S7

↓

OUTPUT CONTROL AMOUNT TO UPPER-LEVEL GENERATORS — S8

ALLOCATE DIFFERNCES TO VARIOUS DISTRIBUTION SYSTEMS — S9

↓

CALCULATE CONTROL AMOUNT OF CONTROL ITEMS IN ACCORDANCE WITH ECONOMIC LOAD ALLOCATION — S10

↓

OUTPUT CONTROL AMOUNT TO CONTROLLABLE ITEMS — S11

## FIG. 7

**INTERNATIONAL SEARCH REPORT**

International application No.

PCT/JP2014/000345

A. CLASSIFICATION OF SUBJECT MATTER
*H02J3/00*(2006.01)i, *G06Q50/06*(2012.01)i, *H02J3/46*(2006.01)i

According to International Patent Classification (IPC) or to both national classification and IPC

B. FIELDS SEARCHED

Minimum documentation searched (classification system followed by classification symbols)
H02J3/00, G06Q50/06, H02J3/46

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2004-040956 A  (Osaka Gas Co., Ltd.),<br>05 February 2004 (05.02.2004),<br>paragraphs [0023] to [0026], [0033], [0035] to [0036], [0039] to [0040], [0043]<br>(Family: none) | 1,5<br>3-4<br>2 |
| Y | JP 2011-114944 A  (Fuji Electric Systems Co., Ltd.),<br>09 June 2011 (09.06.2011),<br>paragraph [0002]<br>(Family: none) | 3-4 |
| Y | JP 2011-114945 A  (Fuji Electric Systems Co., Ltd.),<br>09 June 2011 (09.06.2011),<br>paragraphs [0017] to [0018], [0032]<br>(Family: none) | 4 |

☒ Further documents are listed in the continuation of Box C.        ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
18 April, 2014 (18.04.14)

Date of mailing of the international search report
28 April, 2014 (28.04.14)

Name and mailing address of the ISA/
Japanese Patent Office

Authorized officer

Facsimile No.

Telephone No.

Form PCT/ISA/210 (second sheet) (July 2009)

16

**INTERNATIONAL SEARCH REPORT**

International application No.

PCT/JP2014/000345

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-175825 A  (Mitsubishi Electric Corp.), 10 September 2012 (10.09.2012), paragraphs [0024] to [0025], [0037], [0114] to [0115], [0129] (Family: none) | 2 |
| A | JP 2008-295175 A  (Mitsubishi Electric Corp.), 04 December 2008 (04.12.2008), paragraphs [0003], [0006] (Family: none) | 3 |
| P,X | JP 2013-240154 A  (Toshiba Corp.), 28 November 2013 (28.11.2013), paragraphs [0027] to [0028], [0030], [0032], [0035], [0038] to [0044], [0059], [0072] to [0077]; fig. 1 to 5, 10, 12 (Family: none) | 1-3,5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP TOKKAI201234444 B

**Non-patent literature cited in the description**

- **GILL, P. E. ; W. MURRAY ; M. H. WRIGHT.** Numerical Linear Algebra and Optimization. Addison Wesley, 1991, vol. 1
- **K. SCHITTKOWSKI.** *The nonlinear programming,* 1981
- Convergence analysis. *Numerische Mathematik,* vol. 38, 83-114
- An efficient implementation with linear least-squares sub-problems. *Numerische Mathematik,* vol. 38, 115-127